# EUROPEAN PATENT APPLICATION

(11) **EP 4 730 601 A1**
(43) Date of publication of application: **22.04.2026**
(21) Application number: 25207887.8
(22) Date of filing: 10.10.2025
(51) Int. Cl.: H02J 7/36, H01M 10/48, H02J 7/44, H02J 7/40, H02J 7/45, H02J 7/46, H02J 7/50, H02J 7/60, H02J 7/82, H02J 7/84

(54) **ENERGY STORAGE SYSTEM**

(30) Priority: 18.10.2024 KR 20240142763
(71) Applicant: SAMSUNG SDI CO., LTD., Yongin-si, Gyeonggi-do 17084 (KR)
(72) Inventor: KO, Sungmin, Yongin-si, Gyeonggi-do 17084 (KR)
(74) Representative: Gulde & Partner

(57) **Abstract**

An energy storage system includes a battery container including a master battery container and sub-battery containers electrically connected to each other, and a power conversion system, PCS, wherein the master battery container includes battery racks, a system battery management system, BMS, configured to monitor states of the battery racks and of battery racks included in the plurality of sub-battery containers, and configured to control operations thereof, a master programmable logic controller, PLC, configured to monitor a state of the master battery container, a first switch controlled by a switching control signal generated by the master PLC upon receiving a request from the system BMS, and a second switch controlled by a switching control signal of the system BMS, wherein the system BMS and the PLC are further configured to transmit or receive data through a contact method.

## Description

### RELATED ART

Various aspects of the present disclosure relate to an energy storage system.

Energy storage systems (ESSs) are systems that store large amounts of electrical energy, and that supply the stored electrical energy at a time at which the electrical energy is suitably used, thereby increasing energy usage efficiency. For example, in response to market changes and customer desires, there is a strengthening trend to use ESS products of units of containers, which are completely installed in advance, than simple products of units of battery racks and a plurality of battery modules.

These ESSs of units of containers may be controlled through complex network-based digital communication. Such a digital communication method has various problems in that the reliability and responsiveness of systems may be seriously affected. For example, factors, such as network delay, data loss, and electromagnetic interference, may significantly reduce the efficiency and stability of systems. These problems may seriously limit the operation of ESSs, which utilize rapid and accurate responses.

The above information disclosed in this related art section is only for enhancement of understanding of the background of the present disclosure, and therefore may contain information that is not related art.

### SUMMARY

The present disclosure is directed to solving problems of network-based digital communication occurring in the operation of an energy storage system (ESS).

The present disclosure is directed to providing an energy storage system that enables reliable and stable control by adopting a contact communication method instead of a network-based digital communication method which also improves the safety of the energy storage system, in particular with respect to minimizing the risk of hacking.

However, the aspects of the present disclosure are not limited to the above, and other aspects that are not described herein will be clearly understood by those skilled in the art from the following disclosure.

An energy storage system according to one or more embodiments of the present disclosure includes a battery container including sub-battery containers electrically connected to each other, and including battery racks, and a master battery container including battery racks including battery modules, a system battery management system (BMS) configured to monitor states of, and to control operations of, the battery racks of the master battery container and the sub-battery containers, a master programmable logic controller (PLC) configured to monitor a state of the master battery container, to transmit a monitoring result to the system BMS, and to transmit data to, or receive data from, the system BMS, a first switch configured to be controlled by a switching control signal from the master PLC based on a request from the system BMS to control electrical connection between one or more of the battery racks and the PCS, and a second switch configured to be controlled by a switching control signal of the system BMS to control electrical connection between one or more of the battery modules and the first switch, and a power conversion system (PCS) configured to convert direct current power from the battery container into alternating current power, and transmit the alternating current power to a power system, and convert alternating current power from the power system into direct current power, and transmit the direct current power to the battery container.

The system BMS may be further configured to transmit a switching-on request signal of the first switch to the master PLC, wherein the master PLC is further configured to output the switching control signal for switching on the first switch based on the switching-on request signal, and to transmit a switching-on state feedback signal of the first switch to the system BMS, and wherein the system BMS is further configured to output the switching control signal for switching on the second switch based on the switching-on state feedback signal from the master PLC.

The first switch and the second switch may be configured to provide a charge/discharge path, for example via electrical cables of a certain diameter, between the PCS and the battery modules.

The system BMS and the master PLC may be configured to perform data communication through a first cable connecting an output contact of the system BMS to an input contact of the master PLC, and a second cable connecting an input contact of the system BMS to an output contact of the master PLC.

The system BMS may be further configured to transmit a switching-on request signal of the first switch to the master PLC through the first cable, wherein the master PLC is further configured to output the switching control signal for switching on the first switch based on the switching-on request signal, and to transmit a switching-on state feedback signal of the first switch to the system BMS through the second cable, and wherein the system BMS is further configured to output the switching control signal for switching on the second switch based on the switching-on feedback signal.

The first switch and the second switch may be configured to provide a charge/discharge path, for example via electrical cables of a certain diameter, between the master PCS and the battery modules.

The energy storage system may further include an energy management system configured to integrally manage an operation of the energy storage system, and to transmit or receive data to or from the system BMS based on transmission control protocol/internet protocol (TCP/IP) communication.

The system BMS may be further configured to transmit or receive data to or from the battery racks based on controller area network (CAN) communication.

The battery racks may be configured to transmit or receive data in a daisy chain manner based on the CAN communication. This reduces the length and number of cables to be used and enables an easy potential extension.

The master PLC may be further configured to transmit or receive data to or from sub-PLCs in the sub-battery containers based on transmission control protocol/internet protocol (TCP/IP) communication.

Other methods for implementing the present disclosure, other systems, and a computer-readable recording medium on which a computer program for executing the method is stored, may be further provided.

Aspects other than those described above will become apparent from the following drawings, claims, and detailed description of the disclosure.

### BRIEF DESCRIPTION OF THE DRAWINGS

The accompanying drawings illustrate embodiments of the present disclosure and, together with the following detailed description, serve to provide further understanding of the aspects of the present disclosure. However, the present disclosure is not to be construed as being limited to the details shown in the drawings, in which:
FIG. 1 illustrates a configuration of an energy storage system according to one or more embodiments of the present disclosure;
FIG. 2 illustrates a physical connection relationship between a system BMS and a master PLC that perform a contact communication method according to one or more embodiments of the present disclosure;
FIG. 3 is a diagram for describing the formation of a charge/discharge path by controlling first and second switches according to one or more embodiments of the present disclosure;
FIG. 4 is a flowchart illustrating a method of transmitting or receiving data between a system BMS and a master PLC according to one or more embodiments of the present disclosure; and
FIG. 5 is a flowchart illustrating a method of transmitting or receiving data between a system BMS, a master PLC, and a slave PLC according to one or more embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the drawings, the relative sizes of elements, layers, and regions may be exaggerated for clarity and/or descriptive purposes. In other words, because the sizes and thicknesses of elements in the drawings are arbitrarily illustrated for convenience of description, the disclosure is not limited thereto. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

It will be understood that when an element, layer, region, or component (e.g., an apparatus, a device, a circuit, a wire, an electrode, a terminal, a conductive film, etc.) is referred to as being "formed on," "on," "connected to," or "(operatively, functionally, or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a relay, a transistor, a resistor, an inductor, a capacitor, a diode and/or the like. Accordingly, a connection is not limited to the connections illustrated in the drawings or the detailed description and may also include other types of connections. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XY, YZ, and XZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure." Furthermore, the expression "being the same" may mean "being substantially the same". In other words, the expression "being the same" may include a range that can be tolerated by those of ordinary skill in the art. The other expressions may also be expressions from which "substantially" has been omitted.

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

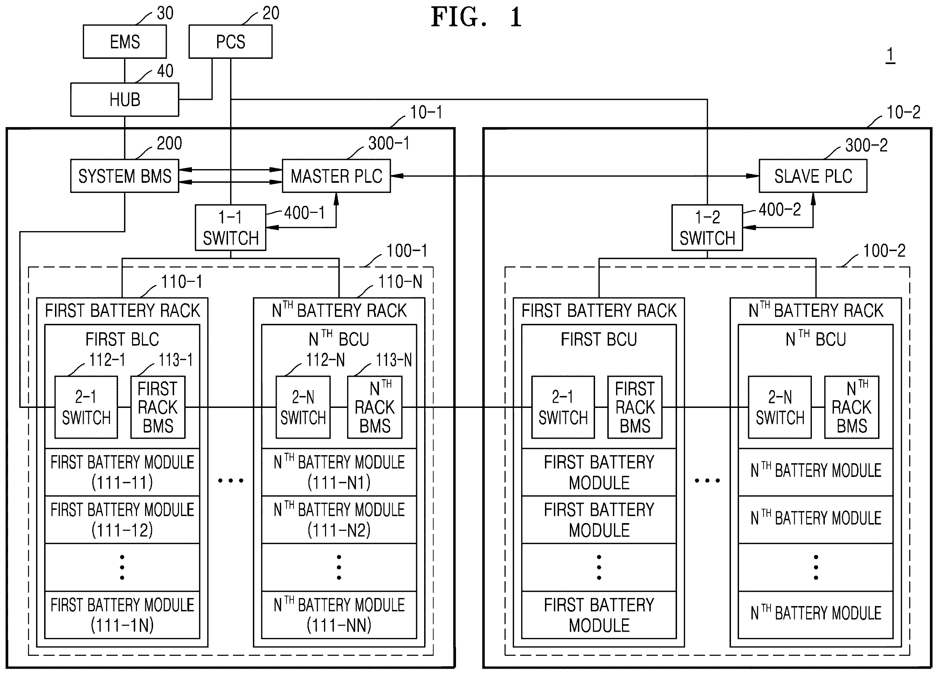

FIG. 1 illustrates a configuration of an energy storage system 1 according to one or more embodiments of the present disclosure. Referring to FIG. 1, the energy storage system 1 may include a battery container 10, a power conversion system (PCS) 20, an energy management system (EMS) 30, and a hub 40.

The battery container 10 may include a master battery container 10-1 and a slave battery container 10-2. Although one slave battery container 10-2 is described, one or more embodiments are not limited thereto, and the slave battery container 10-2 may be expanded to a plurality of slave containers. For convenience of description, the following will be described on the assumption that the battery container 10 includes the master battery container 10-1 and the slave battery container 10-2.

The master battery container 10-1 may include a first battery bank 100-1, a system battery management system (BMS) 200, a master programmable logic controller (PLC) 300-1, and a 1-1 switch 400-1.

The first battery bank 100-1 may include a plurality of battery racks, for example, first to N^{th} battery racks 110-1 to 110-N. The first to N^{th} battery racks 110-1 to 110-N may include a plurality of first battery modules 111-11 to 111-1N to a plurality of N^{th} battery modules 111-N1 to 111-NN, 2-1 to 2-N switches 112-1 to 112-N, and first to N^{th} rack BMSs 113-1 to 113-N.

In one or more embodiments, each of the battery modules included in the plurality of first battery modules 111-11 to 111-1N to the plurality of N^{th} battery modules 111-N1 to 111-NN may include a plurality of battery cells connected in series or parallel with each other. The 2-1 to 2-N switches 112-1 to 112-N and the first to N^{th} rack BMSs 113-1 to 113-N may be included in first to N^{th} battery control units (BCUs).

One or more of the 2-1 to 2-N switches 112-1 to 112-N may be switched on or off by a switching control signal of the system BMS 200. The switches included in the 2-1 to 2-N switches 112-1 to 112-N may include a DC-contactor. The 2-1 to 2-N switches 112-1 to 112-N may electrically connect or electrically separate (e.g., electrically insulate, or disconnect) the 1-1 switch 400-1 to or from the plurality of battery modules 111-N1 to 111-NN included in the first to N^{th} battery racks 110-1 to 110-N by a switching control signal. The 1-1 switch 400-1 may electrically connect or electrically separate one or more of the plurality of battery racks 110-1 to 110-N to or from the PCS 20. The 1-1 switch 400-1 will be described below.

The first to N^{th} rack BMSs 113-1 to 113-N may be respectively connected to the plurality of first battery modules 111-11 to 111-1N and to the plurality of N^{th} battery modules 111-N1 to 111-NN respectively provided in the first to N^{th} battery racks 110-1 to 110-N, and may control an operation of charging or discharging the plurality of first battery modules 111-11 to 111-1N to the plurality of N^{th} battery modules 111-N1 to 111-NN.

The first to N^{th} rack BMSs 113-1 to 113-N may perform an overcharge protection function, an overdischarge protection function, an overcurrent protection function, an overvoltage protection function, an overheating protection function, and/or the like to protect the first battery modules 111-11 to 111-1N to the plurality of N^{th} battery modules 111-N1 to 111-NN. To this end, the first to N^{th} rack BMSs 113-1 to 113-N may monitor a voltage, a current, a temperature, remaining power, a state of health (SOH), a state of charge (SOC), and/or the like for each of the plurality of battery cells included in the first battery modules 111-11 to 111-1N to the plurality of N^{th} battery modules 111-N1 to 111-NN, and may apply suitable protective measures by using monitoring results. In one or more embodiments, the first to N^{th} rack BMSs 113-1 to 113-N may perform a cell-balancing function.

The first to N^{th} rack BMSs 113-1 to 113-N may transmit rack data, which is acquired by monitoring a state of the first battery modules 111-11 to 111-1N to the plurality of N^{th} battery modules 111-N1 to 111-NN, to the system BMS 200. The first to N^{th} rack BMSs 113-1 to 113-N may receive a rack operation control signal from the system BMS 200 to control the operations of the first battery modules 111-11 to 111-1N to the plurality of N^{th} battery modules 111-N1 to 111-NN.

The system BMS 200 may collect rack data output from a first battery bank 100-1 and a second battery bank 100-2 to control the first battery bank 100-1 and the second battery bank 100-2 to operate in an improved or optimal state. To this end, the system BMS 200 may perform a function of monitoring a state (voltage, current, temperature, SOC, SOH, or the like of battery racks included in the first battery bank 100-1 and the second battery bank 100-2, a control function (for example, a temperature control or balancing control function), and a protection function (for example, an overdischarge, overcharge, or overcurrent prevention/avoidance function). The system BMS 200 may transmit bank data including results of monitoring the first battery bank 100-1 and the second battery bank 100-2 to the EMS 30. The EMS 30 may collect bank data to transmit a bank operation control signal to the system BMS 200.

The system BMS 200 may monitor bank data in real time (i.e., within a delay of less than 1 s) and may determine, based on the bank data, whether to switch on/off the 1-1 switch 400-1, a 1-2 switch 400-2, and the second switches 112-1 to 112-N (including second switches included in the second battery bank 100-2).

In one or more embodiments, the master PLC 300-1 may monitor a state and a failure of a chiller, a heating, ventilation, and air conditioning (HVAC) system, and a fire suppression system installed inside the master battery container 10-1, and may collect monitoring results to transmit the monitoring results to the system BMS 200.

In one or more embodiments, the master PLC 300-1 may generate a switching control signal for switching on or off the 1-1 switch 400-1 according to a request of the system BMS 200, and may output the switching control signal to the 1-1 switch 400-1.

The first switch 400-1 may be switched on or off by the switching control signal of the master PLC 300-1. The 1-1 switch 400-1 may include a DC switching unit (DSU). The first switch 400-1 may electrically connect or electrically separate one or more of the first to N^{th} battery racks 110-1 to 110-N to or from the PCS 20.

The slave battery container 10-2 may include the second battery bank 100-2, a slave PLC 300-2, and the 1-2 switch 400-2. The second switch 400-2 may be switched on or off by a switching control signal of the slave PLC 300-2. The slave PLC 300-2 may receive a switching control signal from the master PLC 300-1 to switch on or off the 1-2 switch 400-2. The master PLC 300-1 may transmit the switching control signal to the slave PLC 300-2 according to a request of the system BMS 200. Other description of the slave batter container 10-2 may be the same as that of the master battery container 10-1, and thus repetitive description is omitted.

In the master battery container 10-1, if the master PLC 300-1 switches on the 1-1 switch 400-1 according to a request of the system BMS 200, and then the system BMS 200 switches on one or more of the 2-1 to 2-N switches 112-1 to 112-N, one or more of the plurality of battery racks 110-1 to 110-N may be electrically connected to the PCS 20.

For example, if the master PLC 300-1 switches on the 1-1 switch 400-1 according to a request of the system BMS 200, and then the system BMS 200 switches on the 2-1 switch 112-1, the first battery rack 110-1 may be electrically connected to the PCS 20. The plurality of first battery modules 111-11 to 111-1N included in the first battery rack 110-1 may be electrically connected to the PCS 20 by the system BMS 200. The electrical connection between the plurality of first battery modules 111-11 to 111-1N and the PCS 20 may include the formation of a charge/discharge path between the plurality of first battery modules 111-11 to 111-1N and the PCS 20. The charge/discharge path may be a bidirectional path in order to save costs and improve space efficiency.

In the slave battery container 10-2, the master PLC 300-1 may transmit a signal for switching on the 1-2 switch 400-2 to the slave PLC 300-2 according to a request of the system BMS 200. The slave PLC 300-2 that receives the signal may switch on the 1-2 switch 400-1, and then may generate a switching-on state feedback signal of the 1-2 switch 400-1 to transmit the switching-on state feedback signal to the master PLC 300-1. The master PLC 300-1 may transmit the switching-on state feedback signal of the 1-2 switch 400-1 received from the slave PLC 300-2 to the system BMS 200. Thereafter, if the system BMS 200 switches on one or more of 2-1 to 2-N switches in the second battery bank 100-2, one or more of the plurality of battery racks may be electrically connected to the PCS 20.

The PCS 20 may operate as a power conversion device that converts the characteristics of electricity (DC, AC, voltage, frequency, and the like) to transmit electrical energy between a plurality of battery containers 10 and a power system. Typically, DC type electrical energy may be used in the plurality of battery containers 10, and AC type electrical energy may be used in the power system. The PCS 20 may transmit electrical energy stored in the plurality of battery containers 10 to the power system through DC-to-AC conversion, or may transmit electrical energy supplied from the power system to the plurality of battery containers 10 through AC-to-DC conversion.

In addition to power conversion and distribution functions described above, the PCS 20 may control electricity quality of active power, reactive power, or the like of the energy storage system 1. In one or more embodiments, the PCS 20 may perform a monitoring/control function of monitoring a voltage and an operating state of the energy storage system 1, a system interconnection protection function of protecting the power system in the event of a power outage, and an independent operation function of operating the energy storage system 1 by using the plurality of battery containers 10 even if there is no power.

The EMS 30 may include an integrated control device that monitors and controls the power usage of the power system and the power supply of the energy storage system 1 in real time (i.e., within a delay of less than 1 s) for the efficient energy operation of the energy storage system 1. The EMS 30 may monitor a state of all components (e.g., the battery bank 10, the PCS 20, and the hub 40), which constitute the energy storage system 1, and may control the operation of the energy storage system 1.

The hub 40 may collect data output from the PCS 20 and the EMS 30 to transmit the data to the system BMS 200. In one or more embodiments, the hub 40 may collect data output from the system BMS 200 to transmit the date to the PCS 20 and the EMS 30.

The system BMS 200, the PCS 20, and the EMS 30 may transmit or receive data based on transmission control protocol/internet protocol (TCP/IP) communication.

The system BMS 200 may transmit or receive data to or from the first to N^{th} battery racks 110-1 to 110-N based on controller area network (CAN) communication. The first to N^{th} battery racks 110-1 to 110-N may transmit or receive data in a daisy chain manner based on CAN communication. In one or more embodiments, the system BMS 200 may transmit or receive data to or from a plurality of battery racks provided in the slave battery container 10-2 based on CAN communication. The plurality of battery racks provided in the slave battery container 10-2 may transmit or receive data in a daisy chain manner based on CAN communication. In one or more embodiments, the first to N^{th} battery racks 110-1 to 110-N provided in the master battery container 10-1 and the plurality of battery racks provided in the slave battery container 10-2 may transmit or receive data in a daisy chain manner based on CAN communication.

The master PLC 300-1 may transmit or receive data to or from the slave PLC 300-2 provided in the slave battery container 10-2 based on TCP/IP communication.

The system BMS 200 and the master PLC 300-1 may transmit or receive data through a contact method.

Various communication technologies may be integrated to improve or optimize a data transmission or reception request of each component. The system BMS 200 may ensure high reliability and fast data processing by using a CAN for communication with the plurality of battery racks. In one or more embodiments, a TCP/IP protocol may support a wide range of network connections between the system BMS 200, the PCS 20, and the EMS 30 and between the master PLC 300-1 and the slave PLC 300-2, thereby enabling a complex data request and a wide range of system management. The plurality of battery racks may facilitate an efficient data flow between respective battery racks in a daisy chain manner based on CAN communication. In one or more embodiments, data communication through a contact method may enhance reliability and immediate instruction execution in a short range. Through these various communication methods, the energy storage system 1 improves and/or maximizes overall performance and reliability, and enables flexible system expansion and efficient energy management.

For one or more of the first battery modules 111-11 to 111-1N to the plurality of N^{th} battery modules 111-N1 to 111-NN to be charged or discharged, a charge/discharge path may be formed between the PCS 20 and one or more of the first battery modules 111-11 to 111-1N to the plurality of N^{th} battery modules 111-N1 to 111-NN. To form the charge/discharge path between the PCS 20 and one or more of the first battery modules 111-11 to 111-1N to the plurality of N^{th} battery modules 111-N1 to 111-NN, the 1-1 switch 400-1 may be switched on, and one or more of the 2-1 to 2-N switches 112-1 to 112-N may be switched on.

To this end, the system BMS 200 may transmit a switching-on request signal of the 1-1 switch 400-1 to the master PLC 300-1. The master PLC 300-1 may output a switching control signal for switching on the 1-1 switch 400-1 upon receiving a request signal from the system BMS 200. If the 1-1 switch 400-1 is switched on, the master PLC 300-1 may generate a switching-on state feedback signal of the 1-1 switch 400-1 to transmit the switching-on state feedback signal to the system BMS 200. The system BMS 200 may output a switching control signal for switching on one or more of the 2-1 to 2-N switches 112-1 to 112-N upon receiving a feedback signal from the master PLC 300-1.

To form the charge/discharge path between the PCS 20 and one or more of the plurality of first battery modules 111-11 to 111-1N to the plurality of N^{th} battery modules 111-N1 to 111-NN, the system BMS 200 and the master PLC 300-1 should transmit or receive data to or from each other. In a related art, because the system BMS 200 and the master PLC 300-1 transmit or receive data through network-based digital communication, the reliability and response performance of the energy storage system 1 may be reduced due to problems, such as a network delay, electromagnetic interference, and data loss. There may be limitations in operation of the energy storage system 1, which utilizes real-time accurate data transmission and system control.

In one or more embodiments, the system BMS 200 and the master PLC 300-1 may solve the above problems by advantageously adopting a physical cable connection-based contact communication method, rather than a network-based digital communication method. This approach is chosen although a physical cable connection contact communication method requires more effort with respect to manufacturing.

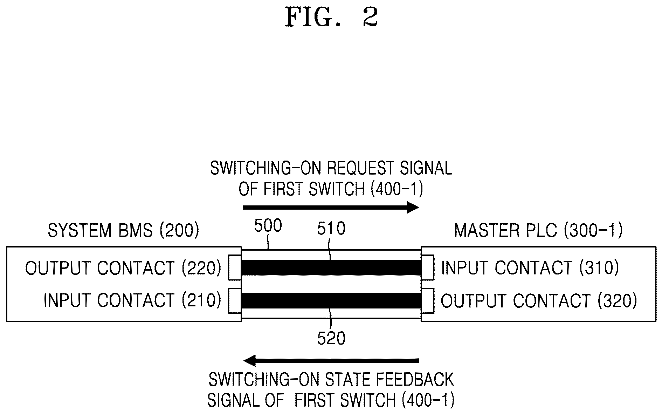

FIG. 2 illustrates a physical connection relationship between the system BMS 200 and the master PLC 300-1 that perform a contact communication method according to one or more embodiments of the present disclosure. In the following description, parts that overlap those described with reference to FIG. 1 will be omitted. Referring to FIG. 2, the system BMS 200 and the master PLC 300-1 may be connected through a cable(s) 500 to transmit or receive data.

The cable 500 may include a first cable 510 and a second cable 520. The first cable 510 may be connected between an output contact 220 through which the system BMS 200 transmits data, and an input contact 310 through which the master PLC 300-1 receives data. The second cable 520 may be connected between an input contact 210 through which the system BMS 200 receives data, and an output contact 320 through which the master PLC 300-1 transmits data.

The system BMS 200 may transmit a switching-on request signal of the 1-1 switch 400-1 to the master PLC 300-1 through the first cable 510. In one or more embodiments, the system BMS 200 may transmit a switching-on request signal of the 1-2 switch 400-2 to the master PLC 300-1 through the first cable 510.

The master PLC 300-1 may transmit a switching-on state feedback signal of the 1-1 switch 400-1 to the system BMS 200 through the second cable 520. In one or more embodiments, the master PLC 300-1 may transmit a switching-on state feedback signal of the 1-2 switch 400-2 to the system BMS 200 through the second cable 520.

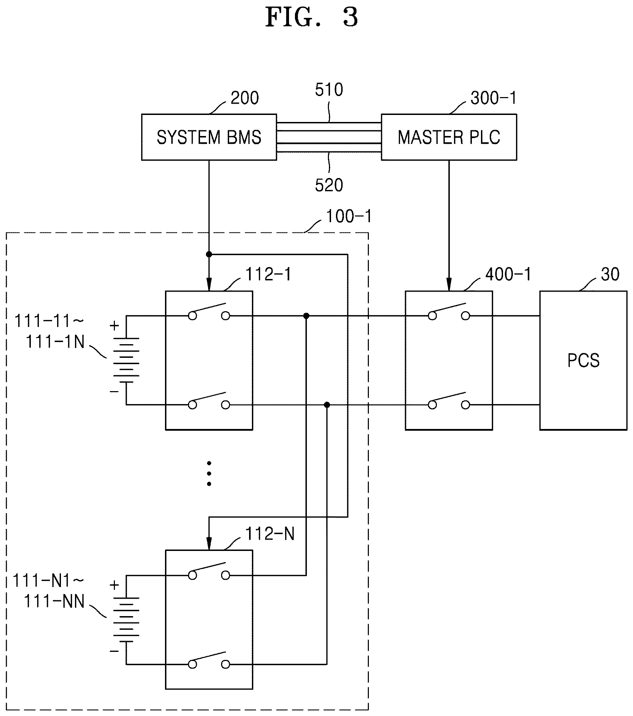

FIG. 3 is a diagram for describing the formation of a charge/discharge path by controlling first and second switches according to one or more embodiments of the present disclosure. In the following description, parts that overlap those described with reference to FIGS. 1 and 2 will be omitted.

Referring to FIG. 3, the 1-1 switch 400-1 may be connected between the first battery bank 100-1 and the PCS 20. The first battery bank 100-1 may be electrically connected or electrically separated to or from the PCS 20 as the 1-2 switch 400-1 is switched on or off.

The 2-1 to 2-N switches 112-1 to 112-N may be connected between the 1-1 switch 400-1 and the plurality of first battery modules 111-11 to 111-1N to the plurality of N^{th} battery modules 111-N1 to 111-NN included in the first to 110-N battery racks 110-1 to 110-N. The plurality of first battery modules 111-11 to 111-1N to the plurality of N^{th} battery modules 111-N1 to 111-NN may be electrically connected or electrically separated to or from the 1-1 switch 400-1 as the 2-1 to 2-N switches 112-1 to 112-N are switched on or off.

For the plurality of first battery modules 111-11 to 111-1N to the plurality of N^{th} battery modules 111-N1 to 111-NN to be electrically connected to the PCS 20, one or more of the 2-1 to 2-N switches 112-1 to 112-N should be switched on, and the 1-1 switch 400-1 should be switched on.

The system BMS 200 and the master PLC 300-1 may be physically connected through the first cable 510 and the second cable 520. The switching on/off of the 1-1 switch 400-1 and the switching on/off of the 2-1 to 2-N switches 112-1 to 112-N may be determined through data transmission/reception based on contact communication through the first cable 510 and the second cable 520.

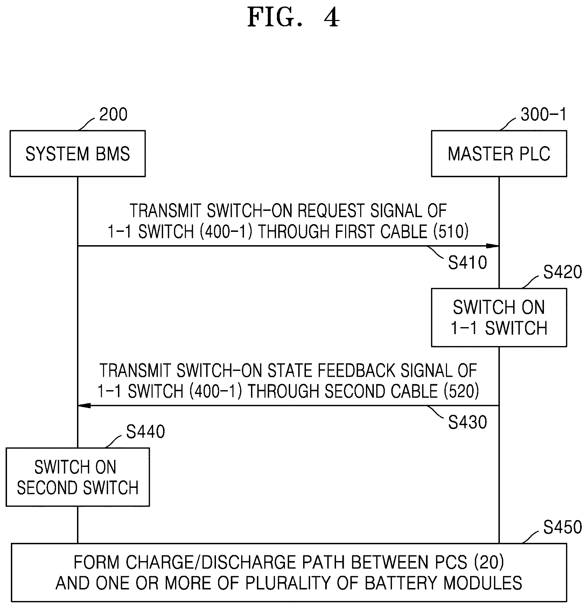

FIG. 4 is a flowchart illustrating a method of transmitting or receiving data between a system BMS and a master PLC according to one or more embodiments of the present disclosure. In the following description, repetitive parts that overlap those described with reference to FIGS. 1 and 3 will be omitted.

In operation S410, the system BMS 200 may transmit a switching-on request signal of the 1-1 switch 400-1 to the master PLC 300-1 through the first cable 510.

In operation S420, the master PLC 300-1 may output a switching control signal for switching on the 1-1 switch 400-1 upon receiving the switching-on request signal of the 1-1 switch 400-1 through the first cable 510. The 1-1 switch 400-1 may be switched on by the switching control signal of the master PLC 300-1.

In operation S430, the master PLC 300-1 may generate a switching-on state feedback signal of the 1-1 switch 400-1, and may transmit the switching-on state feedback signal of the 1-1 switch 400-1 to the system BMS 200 through the second cable 520.

In operation S440, the system BMS 200 may output a switching control signal for switching on one or more of the 2-1 to 2-N switches 112-1 to 112-N upon receiving the switching-on state feedback signal of the 1-1 switch 400-1 through the second cable 520. One or more of the 2-1 to 2-N switches 112-1 to 112-N may be switched on by the switching control signal of the system BMS 200.

In operation S440, as the 1-1 switch 400-1 is switched on, and one or more of the 2-1 to 2-N switches 112-1 to 112-N are switched on, a charge/discharge path may be formed between the PCS 20 and one or more of the plurality of first battery modules 111-11 to 111-1N to the plurality of N^{th} battery modules 111-N1 to 111-NN. As the charge/discharge path is formed, one or more of the plurality of first battery modules 111-11 to 111-1N to the plurality of N^{th} battery modules 111-N1 to 111-NN may supply power to the PCS 20, or may receive power from the PCS 20.

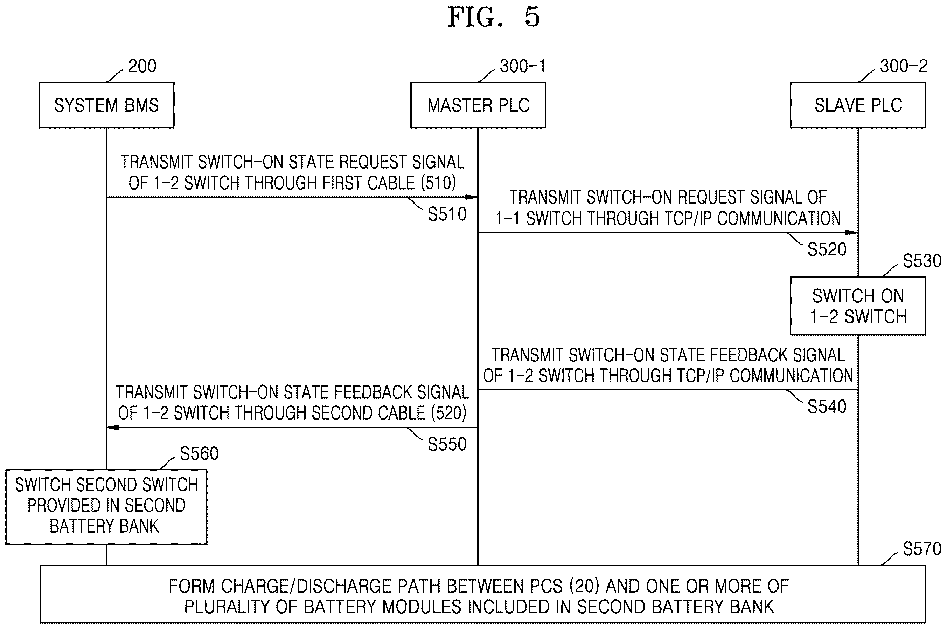

FIG. 5 is a flowchart illustrating a method of transmitting or receiving data between a system BMS, a master PLC, and a slave PLC according to one or more embodiments of the present disclosure. In the following description, parts that overlap those described with reference to FIGS. 1 and 4 will be omitted.

In operation S510, the system BMS 200 may transmit a switching-on request signal of the 1-2 switch 400-2 to the master PLC 300-1 through the first cable 510.

In operation S520, the master PLC 300-1 may transmit the switching-on request signal of the 1-2 switch 400-2 to the slave PLC 300-2 through TCP/IP communication.

In operation S530, the slave PLC 300-2 may output a switching control signal for switching on the 1-2 switch 400-2 upon receiving the switching-on request signal of the 1-2 switch 400-2 from the master PLC 300-1. The 1-2 switch 400-2 may be switched on by the switching control signal of the slave PLC 300-2.

In operation S540, the slave PLC 300-2 may generate a switching-on state feedback signal of the 1-2 switch 400-2, and may transmit the switching-on state feedback signal of the 1-2 switch 400-2 to the master PLC 300-1 through TCP/IP communication.

In operation S550, the master PLC 300-1 may transmit the switching-on state feedback signal of the 1-2 switch 400-2 received from the slave PLC 300-2 to the system BMS 200 through the second cable 52.

In operation S560, the system BMS 200 may output a switching control signal for switching on one or more of the 2-1 to 2-N switches 112-1 to 112-N included in the second battery bank 100-2 upon receiving the switching-on state feedback signal of the 1-2nd switch 400-2 through the second cable 520. One or more of the 2-1 to 2-N switches 112-1 to 112-N may be switched on by the switching control signal of the system BMS 200.

In operation S570, as the 1-2 switch 400-2 is switched on, and one or more of the 2-1 to 2-N switches 112-1 to 112-N included in the second battery bank 100-2 are switched on, a charge/discharge path may be formed between the PCS 20 and one or more of the plurality of first battery modules to the plurality of N^{th} battery modules included in the second battery bank 100-2. As the charge/discharge path is formed, one or more of the plurality of first battery modules to the plurality of N^{th} battery modules included in the second battery bank 100-2 may supply power to the PCS 20 or may receive power from the PCS 20.

Although the present disclosure has been described with limited embodiments and drawings, the present disclosure is not limited to thereto, and instead, it would be appreciated by those skilled in the art that various modifications and changes may be made to these embodiments without departing from the aspects of the present disclosure, the scope of which is defined by the claims and their equivalents.

According to the present disclosure, the reliability and safety of an energy storage system may be improved by reducing or minimizing a network delay and electromagnetic interference through a contact communication method of transmitting or receiving data through physical contact.

In one or more embodiments, a contact communication method of transmitting or receiving data through physical contact has a simple configuration, which enables rapid diagnosis and repair in the event of a failure, and which facilitates maintenance of an energy storage system.

However, the aspects that may be achieved through the present disclosure are not limited to the above-described aspects, and other aspects that are not described herein will be clearly understood by those skilled in the art from the following disclosure.

## Claims

1. An energy storage system (1) comprising:
a battery container (10-2) comprising:
sub-battery containers (10-2) comprising battery racks; and
a master battery container (10-1) comprising:
battery racks comprising battery modules (111-N1);
a system battery management system, BMS, configured to monitor states of, and to control operations of, the battery racks of the master battery container (10-1) and the sub-battery containers (10-2);
a master programmable logic controller, PLC, configured to monitor a state of the master battery container (10-1), to transmit a monitoring result to the system BMS (200), and to transmit data to, or receive data from, the system BMS (200);
a first switch (400-1) configured to be controlled by a switching control signal from the master PLC (300-1) based on a request from the system BMS (200) to control electrical connection between one or more of the battery racks and the PCS (20); and
a second switch (112-1, 400-2) configured to be controlled by a switching control signal of the system BMS (200) to control electrical connection between one or more of the battery modules (111-N1) and the first switch (400-1); and
a power conversion system, PCS, (20) configured to:
convert direct current power from the battery container (10-2) into alternating current power, and transmit the alternating current power to a power system; and
convert alternating current power from the power system into direct current power, and transmit the direct current power to the battery container (10-2),
wherein the system BMS (200) and the master PLC (300-1) are further configured to transmit and receive data via a contact communication method.

2. The energy storage system (1) as claimed in claim 1, wherein the system BMS (200) is further configured to transmit a switching-on request signal of the first switch (400-1) to the master PLC (300-1),
wherein the master PLC (300-1) is further configured to output the switching control signal for switching on the first switch (400-1) based on the switching-on request signal, and to transmit a switching-on state feedback signal of the first switch (400-1) to the system BMS (200), and
wherein the system BMS (200) is further configured to output the switching control signal for switching on the second switch (112-1, 400-2) based on the switching-on state feedback signal from the master PLC (300-1).

3. The energy storage system (1) as claimed in claim 2, wherein the first switch (400-1) and the second switch (112-1, 400-2) are configured to provide a charge/discharge path between the PCS (20) and the battery modules (111-N1).

4. The energy storage system (1) as claimed in claims 1 to 3, wherein the system BMS (200) and the master PLC (300-1) are configured to perform data communication through:
a first cable (510) connecting an output contact (220, 320) of the system BMS (200) to an input contact (210, 310) of the master PLC (300-1); and
a second cable (52, 520) connecting an input contact (210, 310) of the system BMS (200) to an output contact (220, 320) of the master PLC (300-1).

5. The energy storage system (1) as claimed in claim 4, wherein the system BMS (200) is further configured to transmit a switching-on request signal of the first switch (400-1) to the master PLC (300-1) through the first cable (510),
wherein the master PLC (300-1) is further configured to output the switching control signal for switching on the first switch (400-1) based on the switching-on request signal, and to transmit a switching-on state feedback signal of the first switch (400-1) to the system BMS (200) through the second cable (52, 520), and
wherein the system BMS (200) is further configured to output the switching control signal for switching on the second switch (112-1, 400-2) based on the switching-on feedback signal.

6. The energy storage system (1) as claimed in claim 5, wherein the first switch (400-1) and the second switch (112-1, 400-2) are configured to provide a charge/discharge path between the master PCS (20) and the battery modules (111-N1).

7. The energy storage system (1) as claimed in claims 1 to 6, further comprising an energy management system configured to integrally manage an operation of the energy storage system (1), and to transmit or receive data to or from the system BMS (200) based on transmission control protocol/internet protocol (TCP/IP) communication.

8. The energy storage system (1) as claimed in claims 1 to 7, wherein the system BMS (200) is further configured to transmit or receive data to or from the battery racks based on controller area network, CAN, communication.

9. The energy storage system (1) as claimed in claim 8, wherein the battery racks are configured to transmit or receive data in a daisy chain manner based on the CAN communication.

10. The energy storage system (1) as claimed in claims 1 to 9, wherein the master PLC (300-1) is further configured to transmit or receive data to or from sub-PLCs in the sub-battery containers (10-2) based on transmission control protocol/internet protocol (TCP/IP) communication.
